# EUROPÄISCHE PATENTSCHRIFT

(11) **EP 1 034 994 B1**
(45) Veröffentlichungstag und Bekanntmachung des Hinweises auf die Patenterteilung: **15.09.2004**
(21) Anmeldenummer: 00102320.9
(22) Anmeldetag: 03.02.2000
(51) Int. Cl.: B60S 3/06

(54) **Fahrzeugwaschanlage**
Vehicle cleaning apparatus
Dispositif de lavage de véhicule

(30) Priorität: 11.03.1999 DE 19910790
(43) Veröffentlichungstag der Anmeldung: 13.09.2000
(73) Patentinhaber: WashTec Holding GmbH, 86153 Augsburg (DE)
(72) Erfinder: Decker, Wolfgang, 86441 Zusmarshausen-Wollbach (DE)
(74) Vertreter: Rapp, Bertram, Dr.

(56) Entgegenhaltungen:
- WO-A-98/25802
- DE-A- 19 730 886
- GB-A- 885 104
- US-A- 5 016 662
- US-A- 5 245 725
- US-A- 5 482 212
- PATENT ABSTRACTS OF JAPAN vol. 1999, no. 04, 30. April 1999 (1999-04-30) & JP 11 011267 A (ABE TEC KK), 19. Januar 1999 (1999-01-19)

## Beschreibung

Die Erfindung betrifft eine Fahrzeugwaschanlage zum Waschen von Kraftfahrzeugen, insbesondere eine Portalwaschanlage, nach dem Oberbegriff des Anspruchs 1.

Aus der WO 9 825 802 A ist eine gattungsgemäße Fahrzeugwaschanlage bekannt, bei der ein mit Sprühdüsen versehenes horizontales Druckrohr über eine scherenartige Tragkostruktion in der Höhe verstellbar an einem Querträger eines portalförmigen Gestells angeordnet ist. Das Druckrohr ist an den Enden abgewinkelt und enthält dort angeordnete schräge Düsenöffnungen, die auf die Fahrzeugseiten gerichtet sind. Zur Reinigung der beiden Fahrzeugseiten sind an dem Querträger beidseitige Seitensprühvorrichtungen mit vertikalen Sprührohren angebracht. Mit einer derartigen bürstenlosen Fahrzeugwaschanlage kann aber nur eine Hochdruckwäsche durchgeführt werden.

Der Erfindung liegt die Aufgabe zugrunde, eine Fahrzeugwaschanlage zu schaffen, die in technisch einfacher Weise sowohl bei Pkw als auch bei höheren Kraftfahrzeugen neben einer Hochdruck-Vorwäsche auch eine Reinigung durch Waschbürsten mit gutem Waschergebnis ermöglicht.

Diese Aufgabe wird durch eine Fahrzeugwaschanlage mit den Merkmalen des Anspruchs 1 gelöst.

Die weiteren Sprühdüsen für den oberen Fahrzeugseitenbereich sind an dem Träger einer für die Reinigung des Fahrzeugdachs vorgesehenen Waschbürste auf der Höhe der Unterkante der Waschbürste von dieser in Axialrichtung beabstandet angeordnet. Dies ermöglicht in besonders einfacher Weise, daß mit den weiteren Sprühdüsen ein Bereich gerade unterhalb der Waschbürste, nämlich im Bereich der oberen Kontur eines Fahrzeuges erreicht wird. Die Waschbürste kann hierbei dazu dienen, die Ausbreitung eines vom Fahrzeug reflektierten Spritznebels zu unterbinden. Durch die Anordnung neben den axialen Enden der Waschbürsten ergibt sich eine besonders kompakte Bauweise, bei der die Bewegung der Waschbürste von der Lage der weiteren Sprühdüsen nicht beeinträchtigt wird.

Durch die Anordnung der weiteren Sprühdüsen können diese in ihrer Lage optimal an die obere Kontur bzw. Höhe des zu waschenden Fahrzeugs angepaßt werden, so daß sich auch bei höheren Fahrzeugen im oberen Bereich ein stets gutes Reinigungsergebnis erzielen läßt. Bei niedrigeren Pkw überlappt sich der Sprühwinkel der weiteren Sprühdüsen mit der Sprühhöhe der neben der Fahrzeugwaschposition angeordneten Seitensprühdüsen. Dies ist jedoch für das Reinigungsverhalten nicht störend, sondern fördert vielmehr den Reinigungseffekt bzw. einen Abspülvorgang im stark eingezogenen Dachkantenbereich von Pkw neuerer Bauart. Die Höhenverstellbarkeit der weiteren Sprühdüsen ermöglicht eine optimale Anpassung an die Fahrzeughöhe und verhindert, daß diese Düsen ins Leere Sprühen. Überdies sind damit alle Sprühdüsen als Hochdruckdüsen optimal auslegbar.

Vorzugsweise erstreckt sich eine obere Flanke des Sprühwinkels der weiteren Sprühdüse bis zur oberen Fahrzeugkontur, wodurch bei effektiver Hochdruck-Vorwäsche bis zur oberen Fahrzeugkontur einschließlich des Dachkantenbereichs ein optimaler Einsatz des aufgebrachten Reinigungswassers erfolgt.

Nach einer vorteilhaften Ausgestaltung erstreckt sich eine obere Flanke des Sprühwinkels bis unmittelbar unterhalb eines Umfangsbereichs der horizontal angeordneten Waschbürste oder geringfügig in diesen hinein. Diese Anordnung ermöglicht eine Kopplung der Konturführung der Waschbürste mit der der weiteren Sprühdüsen, so daß der Steuerungsaufwand bei der Hochdruck-Vorwäsche gering gehalten und gleichzeitig ein wirksames Abspülen des zu waschenden Fahrzeuges erzielt wird.

Nach einer vorteilhaften Ausgestaltung der Erfindung sind alle Sprühdüsen einer oder beider Sprühvorrichtungen von einer gemeinsamen Pumpe mit Druck beaufschlagt.

Hierdurch kann der Konstruktionsaufwand des Druckversorgungssystems gering gehalten werden.

Gemäß einer vorteilhaften Weiterbildung ist an dem höhenverstellbaren Träger an den beiden Seiten der Waschbürste jeweils ein nach unten gerichtetes Hochdruckrohr angebracht, das jeweils an eine der weiteren Sprühdüsen zur Reinigung eines Dachkantenbereichs aufweist. Hierdurch läßt sich in besonders einfacher Weise eine höhengenaue Plazierung der weiteren Sprühdüsen verwirklichen. Da die Anbringung unmittelbar an dem Träger der Waschbürste erfolgt, wird das Hochdruckrohr und damit auch die weiteren Sprühdüsen automatisch mit der Höheneinstellung der Waschbürste auf die richtige Fahrzeughöhe der oberen Kontur folgend eingestellt.

Vorzugsweise sind die Sprühdüsen an dem Träger um mindestens eine ebenfalls an dem Träger vorgesehene Zusatzdüse ergänzt, deren Sprühwinkel auf einen Fahrzeugdachbereich der Fahrzeugwaschposition gerichtet ist, zur Reinigung eines Fahrzeugdaches. Die mindestens eine Zusatzdüse kann an beliebiger Stelle an dem Träger angeordnet werden, wobei darauf zu achten ist, daß der Sprühbereich derselben das Fahrzeugdach eines in der Fahrzeugwaschposition befindlichen Fahrzeuges von der Waschbürste ungestört erreichen kann.

Vorzugsweise ist der Sprühwinkel der mindestens einen Zusatzdüse auf einen Bereich unmittelbar vor der Waschbürste gerichtet, bezogen auf eine Relativbewegung zwischen der Waschbürste und dem zu waschenden Fahrzeug. Diese Anordnung ist insbesondere dann vorteilhaft, wenn bei einer Fahrzeugwäsche ein separater Waschgang für eine Hochdruckabspülung insbesondere des Fahrzeugdaches vermieden werden soll. In einer besonders vorteilhaften Ausgestaltung sind zwei separate Zusatzdüsen vorgesehen, die neben den beiden axialen Enden der Waschbürste an jeweils einem von dem Träger auskragenden Auslegearm angeordnet sind, vorzugsweise oberhalb der Drehachse der Waschbürste. Hierdurch läßt sich eine besonders effiziente Hochdruckabspülung des Fahrzeugdaches verwirklichen, indem der Dachbereich des zu waschenden Fahrzeugs knapp vor der Waschbürste zunächst mit Hochdruckwasser und unmittelbar anschließend mit der sich im wesentlichen horizontal erstreckenden Waschbürste gereinigt wird.

Vorzugsweise werden auch die Zusatzdüsen von der Pumpe der Sprühvorrichtungen gespeist, wodurch sich ein besonders einfacher Aufbau der Hochdrucksprühvorrichtung ergibt.

Nach einer weiteren vorteilhaften Ausgestaltung der Erfindung umfassen die Seitensprühvorrichtungen für jede Fahrzeugseite ein senkrechtes, mit Sprühdüsen versehenes Hochdruckrohr, das neben der Fahrzeugwaschposition angeordnet ist, wobei sich die flexible Fluidleitung von dem Hochdruckrohr zu der zugehörigen weiteren Sprühdüse an dem Träger erstreckt. Hierdurch kann die Fluidverbindung zwischen den an dem höhenverstellbaren Träger angeordneten weiteren Sprühdüsen und den in ihrer Höhe stationären Sprühdüsen an den Hochdruckrohren neben der Fahrzeugwaschposition möglichst kurz gehalten werden, so daß das Auftreten von Druckschwingungen im Hochdruckbereich vermieden wird.

Gemäß einer vorteilhaften Ausführungsform der Erfindung ist eine Vorrichtung zur Erfassung der oberen Kontur eines in der Fahrzeugwaschposition befindlichen Fahrzeuges vorgesehen, die mit einer Steuervorrichtung zusammenwirkt, zur Absenkung des höhenverstellbaren Trägers auf eine der Fahrzeugkontur zugeordnete Höhe, bei der die am Träger befindlichen weiteren Sprühdüsen den Bereich der oberen Kontur des Fahrzeugs besprühen. Durch die Koppelung der Höheneinstellung der weiteren Sprühdüsen mit der Höheneinstellung des Trägers zur Regulierung der sich horizontal erstreckenden Waschbürste kann ein zusätzlicher Steuerungsaufwand zur Einstellung der weiteren, an dem Träger befindlichen Sprühdüsen auf die Fahrzeughöhe vermieden werden.

Die Erfindung wird nachfolgend anhand der in der Zeichnung dargestellten Ausführungsbeispiele näher erläutert. Dabei zeigt
- **Figur 1**: eine Fahrzeugwaschanlage mit einem höheren Fahrzeug in der Waschposition,
- **Figur 2**: die Fahrzeugwaschanlage von Figur 1 mit einem Pkw üblicher Bauhöhe in der Fahrzeugwaschposition,
- **Figur 3**: eine alternative Ausführungsform der in Figur 1 dargestellten Fahrzeugwaschanlage, bei der an dem Träger zwei Zusatzdüsen zur Hochdruckabspülung des Fahrzeugdaches vorgesehen sind,
- **Figur 4**: die Fahrzeugwaschanlage von Figur 3 mit einem Pkw üblicher Bauhöhe in der Fahrzeugwaschposition und
- **Figur 5**: einen Längsschnitt der in den Figuren 3 und 4 dargestellten Fahrzeugwaschanlage.

Die Ausführungsbeispiele zeigen jeweils eine als Fahrzeugwaschanlage 1 ausgebildete Portalwaschanlage, bei der das zu waschende Fahrzeug während des Waschvorganges im wesentlichen an einer festen Fahrzeugwaschposition P verharrt. Hierbei sind an einem Portalrahmen 2, der neben der Fahrzeugwaschposition angeordnete Seitenständer 2a sowie eine über der Fahrzeugwaschposition angeordnete Traverse 2b umfaßt, eine Vielzahl von Sprühdüsen 6 zur Aufbringung von Wasser und/oder Waschmittel auf das zu waschende Fahrzeug sowie Waschbürsten 4, 5 angeordnet. Während eines Waschvorganges wird der Portalrahmen mit den Sprühdüsen 6 sowie den Waschbürsten 4, 5 an dem zu waschenden Fahrzeug entlangbewegt. Selbstverständlich kann die Relativbewegung zwischen den Waschbürsten und Sprühdüsen einerseits und dem zu waschenden Fahrzeug andererseits auch durch eine Verschiebung des Fahrzeuges erfolgen, wie dies beispielsweise bei Durchfahrwaschanlagen bzw. Waschstraßen der Fall ist.

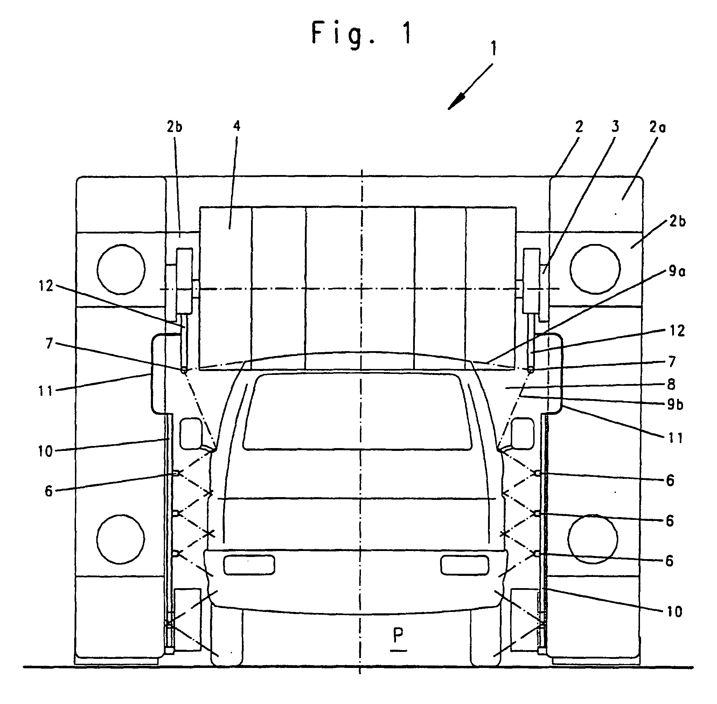

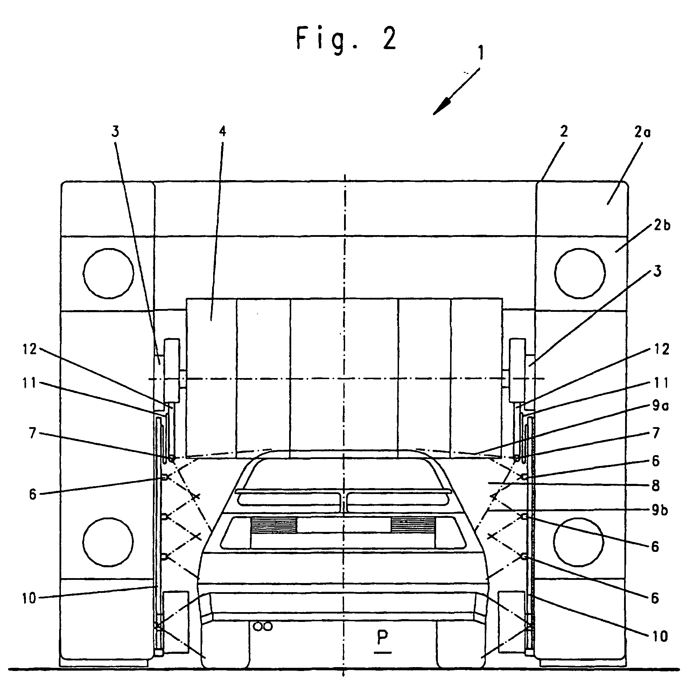

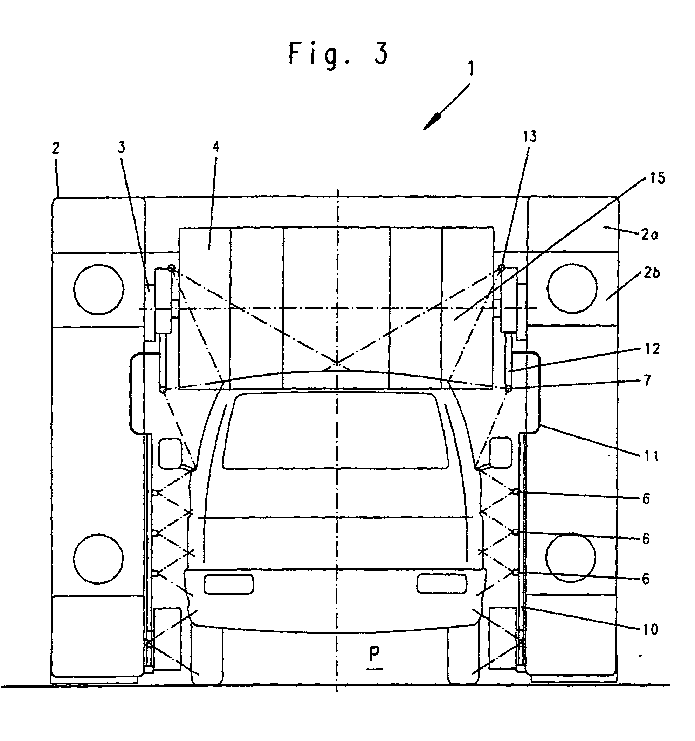

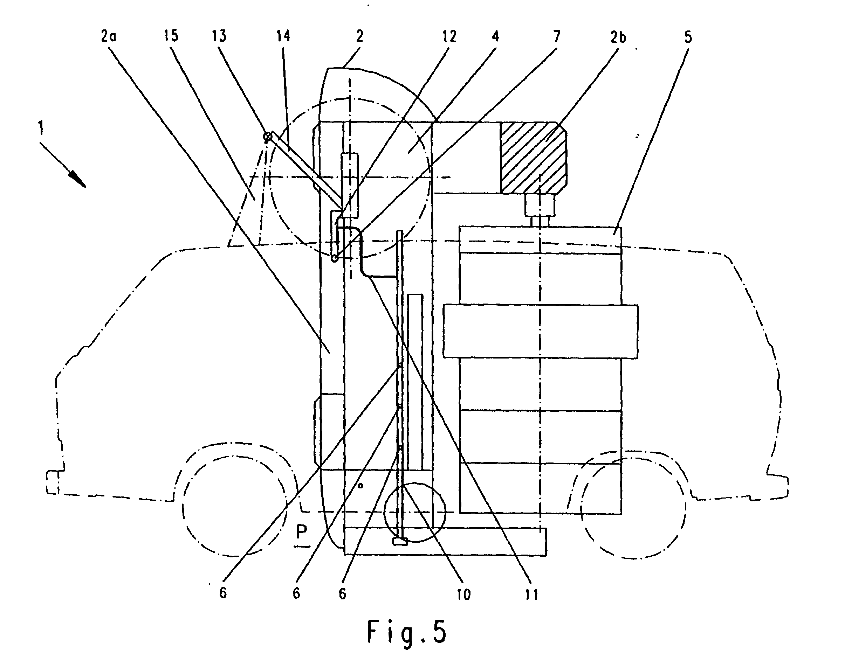

In den Figuren 1 und 2 ist ein erstes Ausführungsbeispiel dargestellt. Ein weiteres Ausführungsbeispiel ist in den Figuren 3, 4 und 5 dargestellt, wobei in beiden Ausführungsbeispielen gleichartige Bauteile auch mit den gleichen Bezugszeichen versehen sind.

Die Fahrzeugwaschanlage 1 umfaßt, wie bereits erwähnt, einen Portalrahmen 2, an dem ein höhenverstellbarer, sich im wesentlichen in Horizontralrichtung erstreckender Träger 3 angeordnet ist. Zur Auf- und Abbewegung des Trägers 3 sind an den beiden einander gegenüberliegenden Seitenstützen 2a des Portalrahmens 2 geeignete Vertikalführungen und entsprechende Antriebsvorrichtungen vorgesehen, die eine gezielte Auf- und Abbewegung des Trägers 3 in Abhängigkeit von der Fahrzeugkontur gesteuert ermöglichen.

An dem Träger 3 ist eine Waschbürste 4 drehantreibbar gelagert. Diese Waschbürste ist in herkömmlicher, dem Fachmann bekannter Art und Weise ausgebildet.

Zur Wäsche der Fahrzeugseiten sind an dem Portalrahmen 2 weiterhin zwei einander gegenüberliegende, sich im wesentlichen in Vertikalrichtung erstreckende Waschbürsten 5 vorgesehen.

Weiterhin sind beiderseits neben der Fahrzeugwaschposition P Seitensprühvorrichtungen mit einer Vielzahl von auf die Fahrzeugwaschposition gerichteten Sprühdüsen 6 und 7 vorgesehen. Dabei sind ein Teil der Sprühdüsen 6 in ihrer Höhe stationär positioniert wohingegen die weiteren Sprühdüsen 7 mit Bezug auf die Fahrzeughöhe verstellbar, d. h. insbesondere auf die Höhe der oberen Kontur des Fahrzeugs absenkbar angeordnet sind. Die weiteren Sprühdüsen 7 sind an dem höhenverstellbaren Träger 3, an dem auch die horizontale Waschbürste 4 vorgesehen ist, angebracht. Prinzipiell ist es jedoch auch möglich, die weiteren Sprühdüsen 7 an einem separaten, höhenverstellbaren Schlitten oder Träger neben der Fahrzeugwaschposition P anzuordnen.

Die in ihrer Höhe stationären Sprühdüsen 6 sind solchermaßen angeordnet, daß ihre Sprühwinkel einen Bereich bis zu einer festen, voreingestellten Höhe überdecken, die der Höhe eines üblichen Pkw entspricht, wie dies in Figur 2 dargestellt ist. Bei höheren Fahrzeugen, wie beispielsweise Mini-Vans, Offroad-Fahrzeugen, Transportern und Kleinbussen reichen die wirksamen Sprühwinkel dieser Sprühdüsen 6 nicht bis zur Dachkantenhöhe, wie dies in Figur 1 dargestellt ist.

Für die oberen seitlichen Fahrzeugabschnitte in Figur 1 werden die an dem Träger 3 befindlichen weiteren Düsen 7 verwendet, deren Höhe entsprechend der oberen Kontur des zu waschenden Fahrzeugs eingestellt wird. Der Sprühwinkel 8 der weiteren Sprühdüsen 7 ist, wie in Figur 1 dargestellt, schräg nach unten auf die Fahrzeugwaschposition P gerichtet, wobei die unten liegende Flanke 9b bis an den wirksamen Sprühwinkel der obersten Sprühdüse 6 hinanreicht, während die obere Flanke 9a des Sprühwinkels 8 sich im wesentlichen bis zu einer horizontalen Linie im Bereich der Unterkante der horizontalen Waschbürste 4 erstreckt. Abweichungen von einigen Winkelgeraden sind hierbei möglich, jedoch wird vermieden, daß mit den weiteren Sprühdüsen 7 direkt in die Waschbürste 4 gesprüht wird. Die obere Flanke 9a erreicht dabei die obere Fahrzeugkontur.

Bei einer Absenkung der weiteren Sprühdüsen 7 auf die Dachkantenhöhe eines üblichen Pkw überlappt sich, wie in Figur 2 dargestellt, der Sprühwinkel 8 der weiteren Sprühdüsen 7 mit dem Sprühbereich der in ihrer Höhe stationären Sprühdüsen 6, wobei der Sprühwinkel 8 den Dachkantenbereich des Fahrzeuges erfaßt. Wie aus Figur 2 besonders gut zu erkennen ist, unterstützten die weiteren Sprühdüsen 7 insbesondere bei Fahrzeugen mit einer im Dachbereich stark eingezogenen Karosserie die Reinigungswirkung der Sprühdüsen 6.

Die Sprühdüsen 6 und 7 werden von einer gemeinsamen Hochdruckpumpe, die in den Figuren nicht dargestellt ist, mit Druck beaufschlagt. Da grundsätzlich alle Sprühdüsen 6 und 7 gleichzeitig aktiv sind, kann auf teure und aufwendige Hochdruck-Umschaltventile zwischen einzelnen der Sprühdüsen verzichtet werden, so daß sich für den Hochdruckbereich eine besonders einfache konstruktive Lösung ergibt. Prinzipiell kann die Druckzufuhr zu den Düsen über individuelle Leitungen erfolgen.

In dem in Figuren 1 und 2 dargestellten Ausführungsbeispiel sind die in ihrer Höhe stationären Sprühdüsen 6 an jeweils einem seitlich neben der Fahrzeugwaschposition P angeordneten, sich in Vertikalrichtung erstreckenden Hochdruckrohr 10 angeordnet. Dieses Hochdruckrohr 10 kann um seine Längsachse drehbar gelagen werden und ist in dem dargestellten Ausführungsbeispiel an dem Portalrahmen 2 im Bereich der Seitenstützen 2 a angebracht, wobei für jede Fahrzeugseite ein eigenes Hochdruckrohr 10 vorgesehen ist.

Für die weiteren Sprühdüsen 7 ist jeweils an dem höhenverstellbaren Träger 3 von beiden axialen Enden der Waschbürste 4 beabstandet ein nach unten gerichtetes Hochdruckrohr 12 angebracht, das an seinem unteren Ende eine Sprühdüse 7 trägt.

Die beiden Hochdruckrohe 10 und 12 sind über eine flexible Fluidleitung 11 miteinander verbunden, wobei die Verbindungsleitung 11 zur Vermeidung des Entstehens von Druckschwingungen im Hochdruckbereich möglichst kurz ausgebildet ist.

Im folgenden wird nun eine Betriebsweise der in den Figuren 1 und 2 dargestellten Fahrzeugwaschanlage beschrieben. Zur Wäsche eines Kraftfahrzeuges wird dieses zunächst in die Fahrzeugwaschposition P verbracht. Anschließend erfolgt ein Einsprühen des Fahrzeugs mit einem Vorwaschmittel, das anschließend in einem Hochdruck-Abspülvorgang abgewaschen wird, bevor eine mechanische Wäsche unter Verwendung vorzugsweise besonders weicher Waschbürsten erfolgt.

Für den Hochdruck-Abspülvorgang werden die weiteren Sprühdüsen 7 im wesentlichen auf die Höhe der oberen Kontur des zu waschenden Fahrzeuges abgesenkt und während des Abspühlvorganges der Kontur nachgeführt. In den dargestellten Ausführungsbeispielen erfolgt die Absenkung der weiteren Sprühdüsen 7 zusammen mit dem die horizontale Waschbürste 4 stützenden, horizontal verstellbaren Träger 3. Die flexible Fluidleitung 11 ermöglicht dabei eine problemlose, stufenlose Höheneinstellung unter Aufrechterhaltung der Fluidverbindung zwischen den Sprühdüsen 6 und 7. Nach erfolgter erstmaliger Höheneinstellung der weiteren Sprühdüsen 7 wird die nicht dargestellte Hochdruckpumpe betätigt, um unter Relativverschiebung zwischen dem Fahrzeug und den Sprühdüsen 6 und 7 und konturgesteuerter Höheneinstellung der weiteren Sprühdüsen 7 dieses abzuspülen. Während des Abspülvorganges wird sämtlicher grober Schmutz von der Fahrzeugoberfläche sowohl bei Pkw üblicher Bauhöhe als auch bei höheren Fahrzeugen gut abgespült. Aufgrund der Zusatzwirkung der weiteren Sprühdüsen 7 ergibt sich auch bei Fahrzeugen mit einem sehr stark eingezogenen Dachkantenbereich eine gute Abspülwirkung der Fahrzeugseiten.

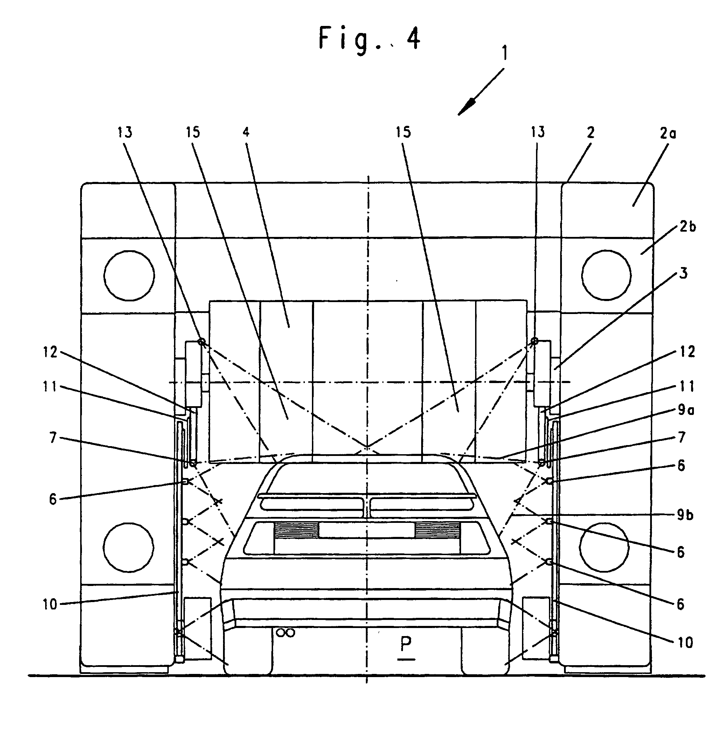

Ein weiteres Ausführungsbeispiel ist in den Figuren 3, 4 und 5 dargestellt. Dieses unterscheidet sich von dem ersten Ausführungsbeispiel durch zusätzliche Düsen 13 zur Abspülung des Fahrzeugdaches und eignet sich besonders für solche Waschprogramme, bei denen ein separater Waschvorgang zur Hochdruckabspülung des Fahrzeugdaches vermieden werden soll. Der Sprühwinkel 15 der Zusatzdüsen 13 ist, wie dies in den Figuren 3 und 4 zu erkennen ist, schräg nach unten auf den Fahrzeugdachbereich gerichtet, wobei es hierzu besonders günstig ist, die Zusatzdüsen 13 ausreichend hoch über dem zu waschenden Fahrzeugdach anzuordnen, um bei geringer Düsenzahl eine gute Abspülwirkung zu erzielen. Bei den in den Figuren 3 und 4 dargestellten Ausführungsbeispielen sind zwei separate Zusatzdüsen 13 neben den beiden axialen Enden der Waschbürste 4 vorgesehen, die jeweils an einem von dem Träger 3 quer zur Trägerachse auskragenden Auslegearm 14 angeordnet sind. Die Zusatzdüsen liegen dabei oberhalb der Drehachse der horizontalen Waschbürste 4 und sind, wie dies aus Figur 3 erkennbar ist, außerhalb des Rotationsradius der Waschbürste 4 angeordnet. Der Sprühwinkel 15 der Zusatzdüsen 13 ist auf einen Bereich unmittelbar vor der Waschbürste 4 gerichtet, bezogen auf eine Relativbewegung zwischen der Waschbürste 4 und dem zu waschenden Fahrzeug, um ein von der Waschbürste 4 ungestörtes Hochdruckabspülen des Fahrzeugdaches zu ermöglichen.

Der Anbau eines kompletten Hochdruckdüsenrohres für die Zusätzdüsen 13 vor der horizontalen Waschbürste 4 wäre technisch möglich, jedoch wäre es dann erforderlich, diese Hochdruckrohr bei Wäschen von hohen Fahrzeugen mit steiler Front aufwendig hochzuklappen, um Beschädigungen zu vermeiden. Durch das Hochklappen würde sich automatisch die Stellung daran angebrachter Zusatzdüsen ändern und ein Vernebeln der Umgebung der Fahrzeugwaschanlage bewirken. Überdies würde sich hierdurch die Länge der Fahrzeugwaschanlage und damit einer gegebenenfalls benötigten Halle vergrößern. Eine Anordnung eines solchen Hochdruckrohres oberhalb der Waschbürste wäre aufgrund des großen Abstandes zu dem abzuspülenden Fahrzeugdach überdies mit einem zu großen Druckbedarf verbunden.

Demgegenüber bietet die Anordnung der Zusatzdüsen 13 an den Enden schräg nach vorne gerichteter Auslegearme 14 eine mit relativ geringem Druckbedarf arbeitende und trotzdem räumlich kompakte Vorrichtung zur effizienten Hochdruckabspülung eines Fahrzeugdaches.

In Abwandlung der oben beschriebenen Ausführungsbeispiele können die weiteren Sprühdüsen 7 wie auch die Zusatzdüsen 13 an einem eigenen, von dem die horizontale Waschbürste 4 stützenden Träger 3 separaten, höhenverstellbaren Träger angeordnet werden, der jedoch nicht unbedingt quer über die Fahrzeugwaschposition P verlaufen muß. Für die Höheneinstellung eines solchen Trägers kann die gleiche Vorrichtung zur Kontursteuerung verwendet werden, die auch zur Einstellung der Höhe des Trägers 3 und damit der horizontalen Waschbürste 4 dient. Hierdurch kann auch bei separater Anordnung der weiteren Sprühdüsen 7 von dem Träger 3 der Aufwand an Erfassungsvorrichtungen und Steuerungsvorrichtungen gering gehalten werden. Gegebenenfalls können die weiteren Sprühdüsen 7 auch an einer sich quer über die Fahrzeugwaschposition P erstreckenden höhenbeweglichen und konturgesteuerten Trocknungsdüse angebracht sein.

Mit den beschriebenen Ausführungsbeispielen läßt sich bei geringem konstruktivem Aufwand eine sehr hohe Reinigungsqualität in einem Hochdruckabspülvorgang einer Fahrzeugwaschanlage verwirklichen, die anschließend den Einsatz besonders weicher Waschbürsten zur mechanischen Reinigung ermöglicht.

## Patentansprüche

1. Fahrzeugwaschanlage zum Waschen von Kraftfahrzeugen, insbesondere Portalwaschanlage, mit beiderseitig neben einer Fahrzeugwaschposition angeordneten Hochdruck-Seitensprühvorrichtungen, die jeweils Sprühdüsen (6) zur Reinigung von Fahrzeugseiten aufweisen, wobei die Sprühdüsen (6) mit ihren Sprühwinkeln einen Bereich bis zu einer Höhe überdecken, die der Höhe eines Pkws entspricht, und mit einem in Abhängigkeit von der Fahrzeugkontur höhenverstellbaren Träger (3), wobei jeder Seitensprühvorrichtung eine weitere, an dem höhenverstellbaren Träger (3) vorgesehene Sprühdüse (7) zugeordnet ist, die mit der zugehörigen Seitensprühvorrichtung über eine flexible Fluidleitung (11) verbunden ist und deren Sprühwinkel (8) jeweils einen auf die Fahrzeugwaschposition gerichteten Fahrzeugseitenbereich überstreicht, der der oberen Fahrzeugkontur des jeweils zu waschenden Fahrzeuges folgt, **dadurch gekennzeichnet, daß** an dem Träger (3) eine Waschbürste (4) zur Reinigung des Fahrzeugdachs angeordnet ist und daß die weiteren Sprühdüsen (7) im Wesentlichen auf der Höhe der Unterkante der Waschbürste (4) von dieser in Axialrichtung beabstandet angeordnet sind.

2. Fahrzeugwaschanlage nach Anspruch 1, **dadurch gekennzeichnet, daß** der Sprühwinkel (8) der weiteren Sprühdüse (7) schräg nach unten auf die Fahrzeugwaschposition gerichtet ist.

3. Fahrzeugwaschanlage nach Anspruch 1 oder 2, **dadurch gekennzeichnet, daß** sich eine obere Flanke (9a) des Sprühwinkels (8) der weiteren Sprühdüse (7) bis zur oberen Fahrzeugkontur erstreckt.

4. Fahrzeugwaschanlage nach einem der Ansprüche 1 bis 3, **dadurch gekennzeichnet, daß** sich eine obere Flanke (9a) des Sprühwinkels (8) bis unmittelbar unterhalb eines Umfangsbereiches der horizontal angeordneten Waschbürste (4) oder geringfügig in diesen hinein erstreckt.

5. Fahrzeugwaschanlage nach einem der Ansprüche 1 bis 4, **dadurch gekennzeichnet, daß** eine obere Flanke (9a) des Sprühwinkels (8) im wesentlichen horizontal angeordnet ist.

6. Fahrzeugwaschanlage nach einem der Ansprüche 1 bis 5, **dadurch gekennzeichnet, daß** alle Sprühdüsen (6, 7) einer oder beider Seitensprühvorrichtungen von einer gemeinsamen Pumpe mit Druck beaufschlagt werden.

7. Fahrzeugwaschanlage nach einem der Ansprüche 1 bis 6, **dadurch gekennzeichnet, daß** an dem höhenverstellbaren Träger (3) an beiden Seiten der Waschbürste (4) jeweils ein nach unten gerichtetes Hochdruckrohr (12) angebracht ist, das jeweils eine der weiteren Sprühdüsen (7) zur Reinigung des Dachkantenbereichs aufweist.

8. Fahrzeugwaschanlage nach einem der Ansprüche 1 bis 7, **dadurch gekennzeichnet, daß** die Sprühdüsen (7) an dem Träger (3) um mindestens eine an dem Träger (3) vorgesehene Zusatzdüse (13) ergänzt sind, deren Sprühwinkel (15) zur Reinigung eines Fahrzeugdaches auf einen Fahrzeugdachbereich der Fahrzeugwaschposition (P) gerichtet ist.

9. Fahrzeugwaschanlage nach Anspruch 8, **dadurch gekennzeichnet, daß** der Sprühwinkel (15) der mindestens einen zusätzlichen Düse (13) auf einen Bereich unmittelbar vor der Waschbürste (4) gerichtet ist, bezogen auf eine Relativbewegung zwischen der Waschbürste (4) und dem zu waschenden Fahrzeug.

10. Fahrzeugwaschanlage nach Anspruch 8 oder 9, **dadurch gekennzeichnet, daß** zwei separate Zusatzdüsen (13) vorgesehen sind, die neben den beiden axialen Enden der mindestens einen Waschbürste (4) von derselben beabstandet an jeweils einem von dem Träger (3) auskragenden Auslegearm (14) angeordnet sind, vorzugsweise oberhalb der Drehachse der Waschbürste (4).

11. Fahrzeugwaschanlage nach einem der Ansprüche 8 bis 10, **dadurch gekennzeichnet, daß** die Zusatzdüsen (13) von der Pumpe der Sprühvorrichtungen gespeist werden.

12. Fahrzeugwaschanlage nach einem der Ansprüche 1 bis 11, **dadurch gekennzeichnet, daß** die Seitensprühvorrichtungen für jede Fahrzeugseite ein senkrechtes, mit Sprühdüsen (6) versehenes Hochdruckrohr (10) umfassen, das neben der Fahrzeugwaschposition (P) angeordnet ist und daß sich die flexible Fluidleitung (11) von diesem Hochdruckrohr (10) zu der zugehörigen weiteren Sprühdüse (7) an dem Träger (3) erstreckt.

13. Fahrzeugwaschanlage nach einem der Ansprüche 1 bis 12, **dadurch gekennzeichnet, daß** diese eine Vorrichtung zur Erfassung der oberen Kontur eines in der Fahrzeugwaschposition (P) befindlichen Fahrzeuges aufweist, die mit einer Steuervorrichtung zusammenwirkt, zur Absenkung des höhenverstellbaren Trägers (3) auf eine der Fahrzeugkontur zugeordnete Höhe, bei der die an dem Träger (3) befindlichen weiteren Sprühdüsen (7) den Seitenbereich entlang der oberen Kontur des Fahrzeuges besprühen.

## Claims

1. Vehicle washing installation for washing of motor vehicles, in particular a portal washing installation, with high-pressure side spraying devices which are arranged on both sides near a vehicle washing position and in each case exhibit spraying nozzles (6) for cleaning of vehicle sides, the spraying nozzles (6) with their spraying angles covering an area up to a height which corresponds to the height of a passenger car, and with a carrier (3) which is adjustable in height depending on the vehicle contour, each side spraying device having associated therewith a further spraying nozzle (7) which is provided on the carrier (3) adjustable in height and is connected with the associated side spraying device through a flexible fluid line (11) and the spraying angle (8) of which in each case covers a vehicle side area which is oriented on the vehicle washing position and follows the upper vehicle contour of the vehicle to be washed, **characterised in that** a washing brush (4) for cleaning of the vehicle roof is arranged on the carrier (3) and **in that** the further spraying nozzles (7) are arranged essentially level with the lower edge of the washing brush (4) a distance from the latter in the axial direction.

2. Vehicle washing installation according to claim 1, **characterised in that** the spraying angle (8) of the further spraying nozzle (7) is oriented obliquely downwards on the vehicle washing position.

3. Vehicle washing installation according to claim 1 or 2, **characterised in that** one upper flank (9a) of the spraying angle (8) of the further spraying nozzle (7) extends as far as the upper vehicle contour.

4. Vehicle washing installation according to one of claims 1 to 3, **characterised in that** one upper flank (9a) of the spraying angle (8) extends to a point directly underneath a circumferential area of the horizontally arranged washing brush (4) or slightly into this.

5. Vehicle washing installation according to one of claims 1 to 4, **characterised in that** one upper flank (9a) of the spraying angle (8) is arranged essentially horizontal.

6. Vehicle washing installation according to one of claims 1 to 5, **characterised in that** all the spraying nozzles (6, 7) of one or both side spraying devices are supplied with pressure by a common pump.

7. Vehicle washing installation according to one of claims 1 to 6, **characterised in that** in each case a downwardly oriented high-pressure pipe (12) which in each case exhibits one of the further spraying nozzles (7) for cleaning of the roof edge area, is mounted on the carrier (3) which is adjustable in height on both sides of the washing brush (4).

8. Vehicle washing installation according to one of claims 1 to 7, **characterised in that** the spraying nozzles (7) on the carrier (3) are augmented by at least one additional nozzle (13) which is provided on the carrier (3) and the spraying angle (15) of which is oriented on a vehicle roof area of the vehicle washing position (P) for cleaning of a vehicle roof.

9. Vehicle washing installation according to claim 8, **characterised in that** the spraying angle (15) of the at least one additional nozzle (13) is oriented on an area directly in front of the washing brush (4), related to a relative movement between the washing brush (4) and the vehicle to be washed.

10. Vehicle washing installation according to claim 8 or 9, **characterised in that** two separate additional nozzles (13) are provided which are arranged near the two axial ends of the at least one washing brush (4) a distance from the latter in each case on an arm (14) projecting from the carrier (3), preferably above the pivot axis of the washing brush (4).

11. Vehicle washing installation according to one of claims 8 to 10, **characterised in that** the additional nozzles (13) are supplied by the pump for the spraying devices.

12. Vehicle washing installation according to one of claims 1 to 11, **characterised in that** the side spraying devices for each vehicle side comprise a vertical high-pressure pipe (10) which is provided with spraying nozzles (6) and is arranged near the vehicle washing position (P), and **in that** the flexible fluid line (11) extends from this high-pressure pipe (10) to the associated further spraying nozzle (7) on the carrier (3).

13. Vehicle washing installation according to one of claims 1 to 12, **characterised in that** this exhibits a device which is designed to detect the upper contour of a vehicle located in the vehicle washing position (P) and co-operates with a control device to lower the carrier (3) which is adjustable in height to a height associated with the vehicle contour and at which the further spraying nozzles (7) located on the carrier (3) spray the side area along the upper contour of the vehicle.

## Revendications

1. Installation de lavage de véhicule pour le lavage d'automobiles, en particulier installation de lavage à portique, avec des dispositifs de pulvérisation latéraux à haute pression, disposés des deux côtés, à côté d'une position de lavage de véhicule, qui présentent respectivement des buses de pulvérisation (6) pour le nettoyage de côtés de véhicule, les buses de pulvérisation (6) couvrant, avec leurs angles de pulvérisation, une zone jusqu'à une hauteur, qui correspond à la hauteur d'une voiture particulière et avec une poutre (3), réglable en hauteur en fonction du profil du véhicule, une autre buse de pulvérisation (7), prévue sur la poutre réglable en hauteur, étant affectée à chaque dispositif de pulvérisation latéral, autre buse qui est reliée au dispositif de pulvérisation latéral associé, par l'intermédiaire d'une conduite de fluide flexible (11) et dont l'angle de pulvérisation (8) couvre respectivement une zone latérale du véhicule, orientée sur la position de lavage de véhicule, qui suit le profil supérieur de véhicule du véhicule, respectivement à laver, **caractérisée en ce qu'**il est disposé, sur la poutre (3), une brosse de lavage (4) pour le nettoyage du toit du véhicule et que les autres buses de pulvérisation (7) sont disposées essentiellement sur la hauteur du bord inférieur de la brosse de lavage (4), éloignées de celle-ci dans le sens axial.

2. Installation de lavage de véhicule selon la revendication 1, **caractérisée en ce que** l'angle de pulvérisation (8) de l'autre buse de pulvérisation (7) est orienté obliquement vers le bas, sur la position de lavage de véhicule.

3. Installation de lavage de véhicule selon la revendication 1 ou 2, **caractérisée en ce qu'**un flanc supérieur (9a) de l'angle de pulvérisation (8) de l'autre buse de pulvérisation (7) s'étend jusqu'au profil supérieur du véhicule.

4. Installation de lavage de véhicule selon l'une des revendications 1 à 3, **caractérisée en ce qu'**un flanc supérieur (9a) de l'angle de pulvérisation (8) s'étend jusqu'à directement au-dessous d'une zone périphérique de la brosse de lavage (4), disposée horizontalement ou légèrement à l'intérieur de celle-ci.

5. Installation de lavage de véhicule selon l'une des revendications 1 à 4, **caractérisée en ce qu'**un flanc supérieur (9a) de l'angle de pulvérisation (8) est disposé essentiellement horizontalement.

6. Installation de lavage de véhicule selon l'une des revendications 1 à 5, **caractérisée en ce que** toutes les buses de pulvérisation (6, 7) de l'un des ou des deux dispositifs de pulvérisation latéraux sont alimentées en pression par une pompe commune.

7. Installation de lavage de véhicule selon l'une des revendications 1 à 6, **caractérisée en ce qu'**il est appliqué, sur la poutre (3) réglable en hauteur, des deux côtés de la brosse de lavage (4), respectivement un tuyau à haute pression (12), orienté vers le bas, qui présente respectivement l'une des autres buses de pulvérisation (7), pour le nettoyage de la zone de bord de toit.

8. Installation de lavage de véhicule selon l'une des revendications 1 à 7, **caractérisée en ce que** les buses de pulvérisation (7), disposées sur la poutre (3), sont complétées par au moins une buse supplémentaire (13), prévue sur la poutre (3), dont l'angle de pulvérisation (15) est orienté pour le nettoyage d'un toit de véhicule sur une zone de toit de véhicule de la position de lavage de véhicule (P).

9. Installation de lavage de véhicule selon la revendication 8, **caractérisée en ce que** l'angle de pulvérisation (15) de la au moins une buse supplémentaire (13) est orienté sur une zone directement devant la brosse de lavage (4), par rapport à un mouvement relatif entre la brosse de lavage (4) et le véhicule à laver.

10. Installation de lavage de véhicule selon la revendication 8 ou 9, **caractérisée en ce que** deux buses supplémentaires séparées (13) sont prévues, qui sont disposées à côté des deux extrémités axiales de la au moins une brosse de lavage (4), éloignées de celle-ci, sur respectivement une console (14), faisant saillie à partir de la poutre (3), de préférence au-dessus de l'axe de rotation de la brosse de lavage (4).

11. Installation de lavage de véhicule selon l'une des revendications 8 à 10, **caractérisée en ce que** les buses supplémentaires (13) sont alimentées par la pompe des dispositifs de pulvérisation.

12. Installation de lavage de véhicule selon l'une des revendications 1 à 12, **caractérisée en ce que** les dispositifs de pulvérisation latéraux comprennent, pour chaque côté du véhicule, un tuyau à haute pression (10) vertical, muni de buses de pulvérisation (6), qui est disposé à côté de la position de lavage de véhicule (P) et que la conduite de fluide flexible (11) s'étend depuis ce tuyau à haute pression (10) vers l'autre buse de pulvérisation (7) associée, sur la poutre (3).

13. Installation de lavage de véhicule selon l'une des revendications 1 à 13, **caractérisée en ce que** celle-ci présente un dispositif pour la détection du profil supérieur d'un véhicule, qui se trouve en position de lavage de véhicule (P), dispositif qui coopère avec un dispositif de commande, pour l'abaissement de la poutre (3), réglable en hauteur, sur une hauteur affectée au profil du véhicule, dans laquelle les autres buses de pulvérisation (7), qui se trouvent sur la poutre (3), aspergent la zone latérale, le long du profil supérieur du véhicule.
